# NEUE EUROPÄISCHE PATENTSCHRIFT

(11) **EP 1 967 116 B2**
(45) Veröffentlichungstag und Bekanntmachung des Hinweises auf die Entscheidung über den Einspruch: **06.05.2015**
(45) Hinweis auf die Patenterteilung: 03.11.2010
(21) Anmeldenummer: 08001870.8
(22) Anmeldetag: 01.02.2008
(51) Int. Cl.: A47L 9/28

(54) **Verfahren zur Reinigung einer Bodenfläche mittels eines selbstfahrenden Reinigungsgerätes, insbesondere eines Robotsaugers**
Method for cleaning a floor area with a self-propelling cleaning device, in particular a robotic vacuum cleaner
Procédé de nettoyage d'une surface au sol à l'aide d'un appareil de nettoyage automobile, en particulier d'un robot aspirateur

(30) Priorität: 05.03.2007 DE 102007010979
(43) Veröffentlichungstag der Anmeldung: 10.09.2008
(73) Patentinhaber: Miele & Cie. KG, 33332 Gütersloh (DE)
(72) Erfinder: Ennen, Günther, Dr., 32130 Enger (DE)

(56) Entgegenhaltungen:
- EP-B1- 0 759 157
- WO-A1-92/06631
- DE-B3- 10 261 787
- DE-B3- 10 261 788
- US-A- 5 613 261
- US-A1- 2004 211 444
- US-A1- 2005 166 355

## Beschreibung

Die Erfindung betrifft ein Verfahren zur Reinigung einer Bodenfläche mittels eines selbstfahrenden Reinigungsgerätes, insbesondere eines Robotsaugers, welches mit einer Antriebseinheit, einer Steuereinheit zum Steuern der Fahrtrichtung und einer Sensorvorrichtung zum Erfassen eines positionsabhängigen Zustandsparameters der Bodenfläche ausgestattet ist, wobei die Steuereinheit die Fahrtrichtung in Abhängigkeit des mit der Sensorvorrichtung erfassten positionsabhängigen Zustandsparameters der Bodenfläche steuert.

Die Verwendung von selbstfahrenden Robotern zur Säuberung von Bodenflächen oder zum Rasenschneiden ist bekannt. Einfache Systeme arbeiten nach dem Zufallsprinzip, d. h., bei einer Kollision mit einem Hindernis ändern sie lediglich ihre Fahrtrichtung. Ziel ist jeweils eine möglichst vollständige Bearbeitung einer Bodenfläche, wobei auch mehrfaches Überfahren von Bereichen in Kauf genommen wird. Der damit verbundene Vorteil einer einfachen und preiswerten Sensorik wird mit größerem Zeitbedarf erkauft.

Komplexe Systeme beinhalten eine zielgerichtete Navigation, die unter anderem eine Vermeidung von Kollisionen einschließt. Zur sinnvollen Pfadplanung in einer unbekannten Umgebung ist eine simultane Lokalisation und Kartenerstellung erforderlich (SLAM - Simultaneous Location and Mapping). Die Lokalisation wird üblicherweise durch die Erkennung prägnanter Punkte der Umgebung (Landmarks) unterstützt. Während der Abarbeitung des Pfades muss der Roboter außerdem Hindernissen ausweichen und auf aktuelle Ereignisse reagieren. Hierzu sind bereits verschiedene Verfahren und Strategien unter Verwendung unterschiedlicher Sensorarten bekannt, z. B. Odometrie, optische und akustische Abstandssensoren. Detailreiche Informationen über die Umgebung des Roboters und Abstände von Hindernissen liefern 3D-orientierte Systeme wie Laserscanner oder stereoskopische Kamerasysteme. Das stereoskopische Kamerasystem ähnelt dem menschlichen Gesichtssinn - durch die Unterschiede im rechten und linken Bild können durch Triangulation Tiefeninformationen gewonnen werden. Aus der DE 196 14 916 A1 ist ein Fahrroboter bekannt, der zum Erfassen und Auswerten eines dreidimensionalen Bildes der Fahrumgebung zwei digitale Kameras verwendet.

Neben den Informationen über die räumliche Beschaffenheit der Umgebung können auch positionsabhängige Zustandsparameter der Bodenfläche zur Navigation ausgewertet werden. Aus der DE 102 61 787 B3 und aus der DE 102 61 788 B3 sind mobile Bodenbearbeitungsgeräte der eingangs genannten Art bekannt. Diese Geräte speichern positionsabhängige Referenzwerte des Bearbeitungszustandes nach einer optimalen Bearbeitung. Es wird also auf einer "Lemfahrt" die nicht beseitigbare Restverschmutzung des Bodens ermittelt und während der nachfolgenden Bearbeitungszyklen wird versucht, dieses auf der Lernfahrt ermittelte Ergebnis wieder zu erreichen. Es ist wahrscheinlich, dass verschiedene Bereiche einer Bodenfläche unterschiedlich verschmutzt sind. Das aus der DE 102 61 787 B3 bzw. DE 102 61 788 B3 bekannte Reinigungsverfahren trägt dem Rechnung und versucht nicht, "unerreichbare" Sauberkeitswerte herzustellen. Hierdurch wird zwar der Reinigungsvorgang in den "verschmutzten" Bereichen verkürzt, trotzdem wird zunächst ein Reinigungsversuch durchgeführt. Dies führt zu einer Belastung der bearbeiteten Bodenfläche, längeren Bearbeitungsdauern und gleichzeitig kürzeren Bearbeitungsintervallen aufgrund des hohen Energieverbrauchs und der damit verbundenen schnellen Entladung der Akkus.

Die US 2005/0166355 A1 beschreibt einen Robotsauger, welcher das aktuell gemessene Staubaufkommen mit einem festen Vorgabewert vergleicht und je nach Unter- oder Überschreiten des Vorgabewerts durch den Staubwert von einem Basismodus in einen lokalen Reinigungsmodus wechselt.

Bei einem autonomen Wischgerät gemäß US 5,613,261 ist es ebenfalls bekannt, aktuell gemessene Verschmutzungswerte mit einem Vorgabewert zu vergleichen und davon abhängig die Reinigungsintensität zu steuern. Hier wird als Verschmutzungswert ein Reflektionswert gemessen.

Aus der EP 0 759 157 B1 ist die Verwendung eines piezoelektrischen Sensors zum Nachweis einer mit einem Staubsauger aufgenommenen Staubmenge bekannt.

Der Erfindung stellt sich das Problem, ein Verfahren zur Reinigung einer Bodenfläche der eingangs genannten Art zu offenbaren, bei dem die Bearbeitungsdauer der einzelnen Bereiche der Bodenfläche verkürzt und trotzdem ein zufriedenstellendes Ergebnis erreicht wird.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der bereits erwähnten Verkürzung der Bearbeitungsdauer (verbunden mit einer Materialschonung des Bodenbelags und des Saugers, längeren Akku-Standzeiten, kürzeren Ladezyklen, längerer Akku Lebensdauer, weniger Aktionszeit, die je nach Geräusch und Anwesenheit als störend empfunden werden kann) in der Erzielung eines gleichmäßigen Reinigungsergebnisses.

Ein Ausführungsbeispiel der Erfindung ist in den Zeichnungen rein schematisch dargestellt und wird nachfolgend näher beschrieben. Es zeigt
- Figur 1: einen Schnitt durch ein erfindungsgemäßes Reinigungsgerätes;
- Figur 2: einen Raum mit Fahrspuren des Reinigungsgerätes während der ersten Fahrt;

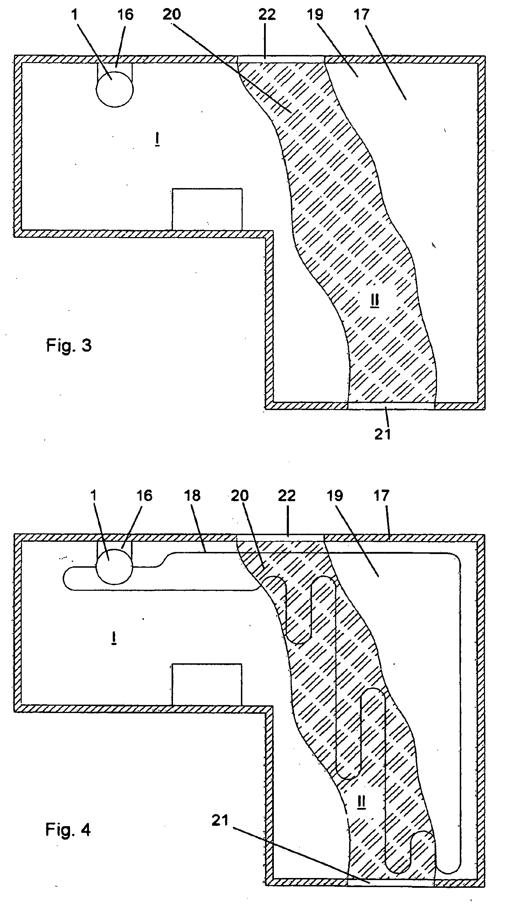

- Figur 3: die während der ersten Fahrt aufgenommene Verschmutzungskarte;
- Figur 4: die Fahrspur des Reinigungsgerätes während der Reinigung der stark verschmutzten Bereiche;

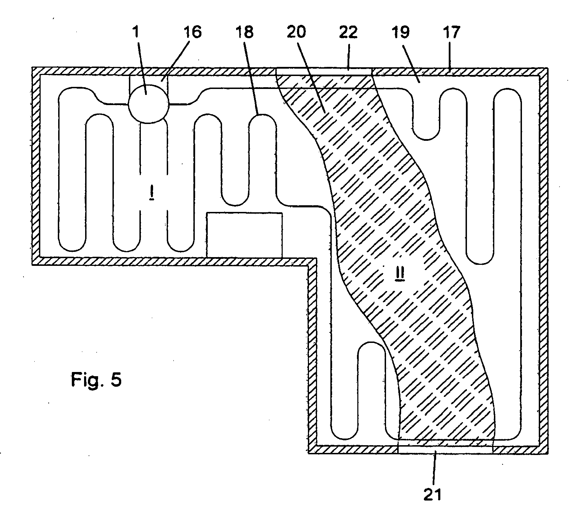

- Figur 5: die Fahrspur des Reinigungsgerätes während der Reinigung der wenig verschmutzten Bereiche.

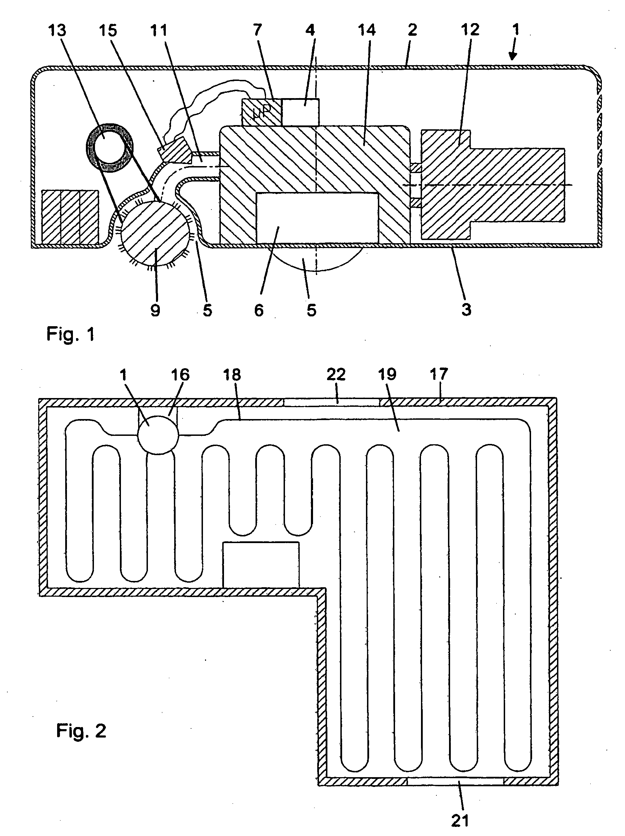

In Figur 1 ist schematisch ein selbstfahrendes Reinigungsgerät, im folgenden Robotsauger 1 genannt, dargestellt, welches zur Durchführung des erfindungsgemäßen Verfahrens geeignet ist. Der Robotsauger 1 besitzt ein Gehäuse 2 mit einer Bodenplatte 3, welche von einem Fahrwerk 5 getragen wird. Das Fahrwerk 5 steht in Verbindung mit einer Antriebseinheit 6, welche mit Hilfe einer Steuereinheit 7 den Robotsauger 1 zielgerichtet navigiert. Die Navigation wird mit Hilfe optischer Sensoren 8 und geeigneter Steuerverfahren durchgeführt. Der Robotsauger 1 besitzt eine Reinigungseinheit, bestehend aus einer rotierenden Bürste 9 und einem Saugmund 10, der über eine Saugleitung 11 mit einem Gebläse 12 in Verbindung steht. Ein drehzahlveränderbarer Motor 13 zur Drehung der Bürste 9 und ein Staubsammelbehälter 14 zum Sammeln und Filtern des aufgesaugten Schmutzes sind ebenfalls symbolisch dargestellt. In die Saugleitung 11 ist ein aus der EP 0 759 157 B1 bekannter piezoelektrischer Staubmengensensor 15 eingesetzt. Der Sensor 15 gibt ein elektrisches Signal an die Steuereinheit 7 weiter, welches mit der an einer Stelle aufgesaugten Schmutzmenge korreliert.

Figur 2 zeigt schematisch den Grundriss eines Raums 17, in welchem der Robotsauger 1 zur Reinigung eingesetzt werden soll. Der Sauger 1 ist durch den Kreis symbolisiert, seinen Ausgangspunkt bildet eine Dockstation 16, in welcher nicht dargestellte Akkuzellen aufgeladen und der Staubsammelbehälter 14 entleert werden kann. Beim ersten Einsatz, der beispielsweise durch eine entsprechende Benutzereingabe identifiziert werden kann, fährt der Robotsauger 1 in einer Lernfahrt systematisch den kompletten Raum 17 auf einer mäandrischen Fahrspur 18 ab und saugt mit maximaler Gebläseleistung und Bürstendrehzahl. Mittels der optischen Sensoren 8 wird dabei von der Steuereinheit 7 eine zweidimensionale Karte des Raumes 17 erstellt und in einem Speicher 4 abgelegt. Gleichzeitig ordnet die Steuereinheit 7 jedem Punkt auf der Karte den dort vom Staubmengensensor 15 gemessenen Anteil an aufgenommenem Staub als Verschmutzungsgrad zu. Orte gleichen Verschmutzungsgrads werden im nächsten Schritt miteinander verbunden, es entsteht eine "Verschmutzungskarte" ähnlich den Höhenlinien auf einer topologischen Karte. Auch diese Karte wird abgespeichert. Im einfachsten Fall wird die Bodenfläche 1 so in Bereiche zweier Klassen "stark verschmutzt - Bereich I" und "wenig verschmutzt - Bereich II" aufgeteilt (siehe Figur 2), was sich aber beliebig verfeinern lässt. Orte starker Verschmutzung sind in begangenen Räumen beispielsweise die Laufstrassen 20 zwischen zwei Türen 21 und 22, die naturgemäß immer stärker verschmutzt sind als der Rest.

Die Steuereinheit 7 des Robotsaugers 1 steuert die Fahrtrichtung seiner Antriebseinheit 6 so, dass die Bereiche je nach Verschmutzungsgrad unterschiedlich behandelt werden, z.B. der Bereich I täglich zwei Stunden mit maximaler Gebläseleistung bei maximaler Bürstendrehzahl, der Bereich II einmal wöchentlich eine halbe Stunde mit halber Gebläseleistung und halber Bürstendrehzahl. Auch diese Klassifizierung lässt sich natürlich verfeinern. Wichtig ist, dass bei jedem Saugen die gemessene Staubmenge zur Aktualisierung mit den vorhandenen Daten z.B. durch Mittelwertbildung oder einer anderen mathematischen Verknüpfung kombiniert werden und dadurch das System adaptiv und selbstlernend wird. Auch die Gebietszuordnungen werden so aktuell gehalten. So wird z.B. während eines Urlaubs automatisch die Saugleistung gesenkt und hinterher wieder erhöht.

Dabei besteht ein Problem: Wird bei gleicher Verschmutzung mit kleinerer Leistung gesaugt, sind die Staubsignale geringer und suggerieren weniger Staub. Dies wird gelöst, indem alle Staubsignale, die bei verringerter Leistung gemessen werden, vor der Mittelwertbildung mit einem festen multiplikativen Faktor korrigiert werden.

Wird der Robotsauger 1 in einen anderen Raum versetzt, wird nach kurzer Zeit eine massive Abweichung der neuen Daten von den alten festgestellt. Hierdurch erkennt die Steuereinheit den Raumwechsel und reagiert mit einer erneuten Lernfahrt mit einer vollständigen Absaugung mit maximaler Gebläseleistung und Bürstendrehzahl.

## Patentansprüche

1. Verfahren zur Reinigung einer Bodenfläche mittels eines selbstfahrenden Reinigungsgerätes, insbesondere eines Robotsaugers (1), welches mit einer Antriebseinheit (6), einer Steuereinheit (7) zum Steuern der Fahrtrichtung und einer Sensorvorrichtung zum Erfassen eines positionsabhängigen Zustandsparameters der Bodenfläche ausgestattet ist, wobei die Steuereinheit (7) die Fahrtrichtung in Abhängigkeit des mit der Sensorvorrichtung erfassten positionsabhängigen Zustandsparameters der Bodenfläche steuert,
**dadurch gekennzeichnet,**
**dass** die Steuereinrichtung (7) als positionsabhängigen Zustandsparameter den Verschmutzungsgrad einzelner Bereiche der Bodenfläche aufgrund des dort während der Reinigung aufgenommenen und von der Sensoreinrichtung erfassten Schmutzaufkommens ermittelt, speichert und die Bearbeitungsintensität eines Bereichs in einem nachfolgenden Bearbeitungszyklus in Abhängigkeit vom gespeicherten Verschmutzungsgrad dieses Bereichs durch Steuerung der Fahrtrichtung der Antriebseinheit (6) derart steuert, dass die Bereiche je nach Verschmutzungsgrad unterschiedlich behandelt werden.

2. Verfahren zur Reinigung einer Bodenfläche nach Anspruch 1,
**dadurch gekennzeichnet,**
**dass** als Sensor ein piezoelektrischer Staubmengensensor (15) verwendet wird.

3. Verfahren zur Reinigung einer Bodenfläche nach einem der vorhergehenden Ansprüche,
**dadurch gekennzeichnet,**
**dass** die Bearbeitungsintensität durch die Bearbeitungsdauer variiert wird.

4. Verfahren zur Reinigung einer Bodenfläche nach einem der vorhergehenden Ansprüche,
**dadurch gekennzeichnet,**
**dass** die Bearbeitungsintensität durch die Bearbeitungshäufigkeit variiert wird.

5. Verfahren zur Reinigung einer Bodenfläche nach einem der vorhergehenden Ansprüche,
**dadurch gekennzeichnet,**
**dass** die Bearbeitungsintensität durch die Saugleistung eines Sauggebläses (12) variiert wird.

6. Verfahren zur Reinigung einer Bodenfläche nach einem der vorhergehenden Ansprüche,
**dadurch gekennzeichnet,**
**dass** die Bearbeitungsintensität durch die Drehzahl einer rotierenden Reinigungsbürste (9) variiert wird.

7. Verfahren zur Reinigung einer Bodenfläche nach einem der vorhergehenden Ansprüche,
**dadurch gekennzeichnet,**
**dass** die Steuereinheit während eines Bearbeitungszyklus' den Verschmutzungsgrad des jeweils bearbeiteten Bereiches ermittelt und den abgespeicherten Wert durch den aktuell ermittelten durch eine mathematische Verknüpfung aktualisiert.

8. Verfahren zur Reinigung einer Bodenfläche nach Anspruch 7,
**dadurch gekennzeichnet,**
**dass** die Steuereinheit den Verschmutzungsgrad mit der jeweiligen Saugleistung des Sauggebläses (12) und/oder mit der Drehzahl der rotierenden Reinigungsbürste (9) verknüpft.

## Claims

1. Method for cleaning a floor surface by means of a self-propelling cleaning device, in particular a robotic vacuum cleaner (1), which is equipped with a drive unit (6), a control unit (7) for controlling the driving direction and a sensor device for detecting a position-dependent status parameter of the floor surface, the control unit (7) controlling the driving direction as a function of the position-dependent status parameter, detected by the sensor device, of the floor surface,
**characterised in that**
the control unit (7) determines and stores the degree of soiling of individual regions of the floor surface as a position-dependent status parameter based on the amount of dirt collected there during cleaning and detected by the sensor device and controls the treatment intensity of a region by controlling the direction of travel of the drive unit (6) in a subsequent treatment cycle as a function of the degree of soiling stored for this region, in such a way that the regions are treated differently according to the degree of soiling thereof.

2. Method for cleaning a floor surface according to claim 1,
**characterised in that**
a piezoelectric dust amount sensor (15) is used as the sensor.

3. Method for cleaning a floor surface according to any one of the preceding claims,
**characterised in that**
the treatment intensity is varied by the treatment time.

4. Method for cleaning a floor surface according to any one of the preceding claims,
**characterised in that**
the treatment intensity is varied by the treatment frequency.

5. Method for cleaning a floor surface according to any one of the preceding claims,
**characterised in that**
the treatment intensity is varied by the suction power of a suction fan (12).

6. Method for cleaning a floor surface according to any one of the preceding claims,
**characterised in that**
the treatment intensity is varied by the rotational speed of a rotating cleaning brush (9).

7. Method for cleaning a floor surface according to any one of the preceding claims,
**characterised in that**,
during a treatment cycle, the control unit detects the degree of soiling of the respective treated regions and refreshes the stored value with the current value by means of a mathematical operation.

8. Method for cleaning a floor surface according to claim 7,
**characterised in that**
the control unit links the degree of soiling to the respective suction power of the suction fan (12) and/or to the rotational speed of the rotating cleaning brush (9).

## Revendications

1. Procédé de nettoyage d'une surface de sol au moyen d'un appareil de nettoyage automoteur, en particulier au moyen d'un aspirateur robot (1), qui est équipé d'une unité d'entraînement (6), d'une unité de commande (7) pour la commande de la direction de déplacement et d'un dispositif de capteur pour la saisie d'un paramètre d'état de la surface de sol dépendant de la position, l'unité de commande (7) commandant la direction de déplacement en fonction du paramètre d'état de la surface de sol dépendant de la position saisi par le dispositif de capteur,
**caractérisé en ce que**,
en tant que paramètre d'état dépendant de la position, le dispositif de commande (7) détermine et enregistre le degré d'encrassement de différentes zones de la surface de sol sur la base du volume de crasse qui y est ramassé pendant le nettoyage et qui est saisi par le dispositif de capteur, et commande l'intensité de traitement d'une zone dans un cycle de traitement consécutif en fonction du degré d'encrassement de cette zone enregistré par la commande de la direction de déplacement de l'unité d'entraînement (6) de telle sorte que les zones sont traitées chacune différemment en fonction du degré d'encrassement.

2. Procédé de nettoyage d'une surface de sol selon la revendication 1,
**caractérisé en ce**
**qu'**un capteur de quantité de poussière (15) piézoélectrique est utilisé comme capteur.

3. Procédé de nettoyage d'une surface de sol selon l'une des revendications précédentes,
**caractérisé en ce que**
l'intensité de traitement est modulée par la durée de traitement.

4. Procédé de nettoyage d'une surface de sol selon l'une des revendications précédentes,
**caractérisé en ce que**
l'intensité de traitement est modulée par la fréquence de traitement.

5. Procédé de nettoyage d'une surface de sol selon l'une des revendications précédentes,
**caractérisé en ce que**
l'intensité de traitement est modulée par la puissance d'aspiration d'un ventilateur d'aspiration (12).

6. Procédé de nettoyage d'une surface de sol selon l'une des revendications précédentes,
**caractérisé en ce que**
l'intensité de traitement est modulée par la vitesse de rotation d'une brosse de nettoyage (9) tournante.

7. Procédé de nettoyage d'une surface de sol selon l'une des revendications précédentes,
**caractérisé en ce que**,
pendant un cycle de traitement, l'unité de commande détermine le degré d'encrassement de la zone respectivement traitée et actualise, par une combinaison mathématique, la valeur mise en mémoire par la valeur actuellement déterminée.

8. Procédé de nettoyage d'une surface de sol selon la revendication 7,
**caractérisé en ce que**
l'unité de commande relie le degré d'encrassement à la puissance d'aspiration respective du ventilateur d'aspiration (12) et/ou à la vitesse de rotation de la brosse de nettoyage (9) tournante.
